# FASCICULE DE BREVET EUROPEEN

(11) **EP 2 920 093 B1**
(45) Date de publication et mention de la délivrance du brevet: **19.04.2017**
(21) Numéro de dépôt: 13795841.9
(22) Date de dépôt: 07.11.2013
(51) Int. Cl.: B65G 47/51

(54) **DISPOSITIF ET PROCÉDÉ D'ACCUMULATION ET DE TRANSFERT**
SPEICHERUNGS- UND ÜBERTRAGUNGSVORRICHTUNG UND -VERFAHREN
DEVICE AND METHOD FOR ACCUMULATING AND TRANSFERRING

(30) Priorité: 16.11.2012 FR 1260926; 16.04.2013 FR 1353421
(43) Date de publication de la demande: 23.09.2015
(73) Titulaire: Gebo Packaging Solutions France, 67116 Reichstett (FR)
(72) Inventeur: PETROVIC, Zmaj, F-76930 Octeville-Sur-Mer (FR)
(74) Mandataire: Eltzer, Thomas
(86) Numéro de dépôt international: PCT/FR2013/052658
(87) Numéro de publication internationale: WO 2014/076390

(56) Documents cités:
- DE-A1- 10 312 695
- DE-U1-202006 009 652

## Description

### DOMAINE DE L'INVENTION

L'invention concerne le domaine des dispositifs et des procédés d'accumulation et de convoyage d'objets.

L'invention concerne en particulier les tables d'accumulation convoyant des objets entre deux machines qui traitent des objets sur une file. L'accumulation permet que l'arrêt de la machine aval n'entraîne pas l'arrêt de la machine amont et vice versa.

L'invention concerne notamment l'accumulation de récipients tels que des briques alimentaires.

### ETAT DE LA TECHNIQUE

La demande DE 103 12 695 décrit un dispositif d'accumulation et de convoyage pour des récipients. Ce dispositif comprend un aiguillage d'une voie d'entrée vers N convoyeurs mono-file de stockage et un aiguillage de rassemblement des N convoyeurs vers une voie de sortie. Les convoyeurs mono-file de stockage sont motorisés indépendamment les uns des autres. Le document DE 20 2006 009 652 U1 décrit un dispositif d'accumulation selon le préambule de la revendication 1. Il existe un besoin de simplifier la conception et de réduire le coût de ce type de dispositif. Il existe aussi un besoin de maximiser le rapport de la surface utile pour accumuler des objets sur la surface d'implantation du dispositif en usine.

### OBJET ET RESUME DE L'INVENTION

L'invention propose un dispositif et un procédé d'accumulation et de convoyage d'objets qui remédient à l'un au moins des besoins précités.

Un but de l'invention est de simplifier la conception des tables d'accumulation.

Selon un premier aspect, l'invention porte sur un dispositif d'accumulation et de transfert d'objets comprenant :
- un convoyeur d'amenée, présentant une portion aval s'étendant dans une direction de convoyage,
- un convoyeur de sortie, présentant une portion amont s'étendant dans la direction de convoyage,
- une surface d'accumulation,
- un premier moyen de transfert pour déplacer au moins un lot d'objets depuis le convoyeur d'amenée jusque sur la surface d'accumulation,
- un deuxième moyen de transfert pour déplacer au moins un lot d'objets depuis la surface d'accumulation jusque sur le convoyeur de sortie,

Selon l'invention, au moins l'un des premier et deuxième moyens de transfert comprend un manipulateur robotisé équipé d'une tête de manipulation d'au moins un lot d'objets. En outre, la surface d'accumulation comprend un côté amont, adjacent à la portion aval du convoyeur d'amenée, et un côté aval, opposé au côté amont selon une direction d'accumulation inclinée par rapport à l'une au moins des directions de convoyage, ledit côté aval étant adjacent à la portion amont du convoyeur de sortie.

On comprend que la tête de manipulation peut embarquer simultanément tous les objets du lot transféré pour effectuer soit le premier, soit le deuxième transfert et revenir en position de début du transfert pour transférer un nouveau lot. Le temps de cycle pour faire ce transfert peut correspondre au débit moyen du convoyeur, d'amenée ou de sortie, concerné par ce transfert. Ainsi, il n'est plus besoin de constituer des files parallèles convoyées par plusieurs convoyeurs motorisés individuellement et actionnés chacun à tour de rôle. Le manipulateur robotisé permet de diminuer le nombre d'organes en mouvement.

La direction d'accumulation est par exemple perpendiculaire à la direction de convoyage du convoyeur d'amenée ou du convoyeur de sortie, concerné par le transfert par le manipulateur robotisé.

Avantageusement, l'un des premier et deuxième moyens de transfert comprend ledit manipulateur robotisé, l'autre desdits premier et deuxième moyens comprenant un convoyeur d'accumulation équipé d'un tapis rotatif, lequel tapis rotatif s'étend le long de ladite surface d'accumulation et est entraîné selon une direction de convoyage sensiblement perpendiculaire à une direction de convoyage du convoyeur, d'amenée ou de sortie, concerné par le transfert. L'écart par rapport à la perpendiculaire de l'angle entre lesdites directions de convoyage est inférieur à 10°, de préférence inférieur à 5°.

Le manipulateur robotisé peut présenter trois axes de déplacement, de sorte que la tête de manipulation pouvant avancer à la vitesse du convoyeur, d'amenée ou de sortie, concerné par le transfert. Ainsi, le transfert peut se faire sans arrêter le convoyeur d'amenée ou de sortie.

Avantageusement, les lots d'objets sont des rangées d'objets alignés les uns derrière les autres. La longueur de la rangée d'objets correspond à la largeur du convoyeur d'accumulation. Les rangées d'objets transférées se suivent l'une derrière l'autre sur le convoyeur d'amenée. Elles sont ensuite disposées sur le convoyeur d'accumulation, parallèlement les unes aux autres. Les dernières rangées arrivées sur la surface d'accumulation sont disposées derrière les rangées arrivées précédemment, dans le sens de convoyage du convoyeur d'accumulation.

Dans le cas où le convoyeur d'accumulation correspond au deuxième moyen de transfert, la perpendicularité entre la direction de convoyage du convoyeur d'accumulation et celle du convoyeur de sortie fait que le convoyeur d'accumulation peut fournir directement au convoyeur de sortie toute une rangée d'objets. Au fur et à mesure que le convoyeur d'accumulation avance, celui-ci se vide et la rangée la dernière arrivée se rapproche du convoyeur de sortie. Dans le cas où le convoyeur d'accumulation correspond au premier moyen de transfert, celui-ci se rempli au fur et à mesure que le convoyeur d'accumulation avance. La rangée la première arrivée s'éloigne du convoyeur de sortie.

Selon un mode de réalisation, le dispositif comprend en outre un moyen de détermination d'un taux de remplissage en cours sur la surface d'accumulation et une unité de commande du manipulateur robotisé raccordée audit moyen de détermination, et dans lequel la tête de manipulation est mobile entre une position prédéterminée au-dessus du convoyeur d'amenée ou de sortie et une position variable au-dessus de la surface d'accumulation, laquelle position variable est déterminée par l'unité centrale en fonction du taux de remplissage en cours.

Dans le cas où un convoyeur d'accumulation assure le deuxième transfert, la connaissance du taux d'accumulation en cours permet au robot d'amener la rangée qu'il transfert jusque derrière les rangées déjà présentes sur la surface d'accumulation. Dans le cas où un robot assure le deuxième transfert, la connaissance du taux d'accumulation en cours permet au robot de prendre la première rangée accumulée là où elle est à cet instant sur la surface d'accumulation.

Avantageusement, lorsque le premier moyen de transfert comprend un manipulateur robotisé, la position variable de destination de la rangée transférée est déterminée de manière à pousser les unes contre les autres les rangées d'objets précédemment transférées et encore sur la surface d'accumulation.

Avantageusement, la tête de manipulation est mobile verticalement entre une position active et une position escamotée, et comprend un premier poussoir latéral s'étendant parallèlement à la direction de convoyage du convoyeur d'amenée ou de sortie et conçu pour s'étendre, en position active tout le long d'un coté extérieur du lot d'objets à transférer.

Avantageusement, la tête de manipulation est une coiffe en U, la forme du U étant visible dans un plan perpendiculaire à la direction de convoyage du convoyeur d'amenée ou de sortie. Cela permet qu'une rangée d'objets peut être retirée du convoyeur d'amenée (ou apportée au convoyeur de sortie) par une simple translation latérale de la coiffe en U.

Avantageusement, le dispositif comprend un dispositif d'amenée des objets incluant le convoyeur d'amenée et un moyen d'accumulation intermédiaire disposé en amont du convoyeur d'amenée. L'accumulation intermédiaire permet de boucher les éventuels espaces entre des objets issus, par exemple, d'une machine amont de traitement des objets. Cela permet de garantir que les objets arrivant au convoyeur d'amenée sont en contact, ou quasi en contact, les uns à la suite des autres. Cela permet aux différentes rangées sur la surface d'accumulation d'être dépourvues de trous entres les objets. Cela permet de maximiser l'utilisation de la surface d'accumulation. Dans le cas où un convoyeur d'accumulation assure le transfert de sortie, cela permet que deux rangées du convoyeur d'accumulation puissent pousser une troisième rangée sur le convoyeur de sortie.

Avantageusement, le dispositif comprend un dispositif de sortie des objets incluant le convoyeur de sortie et un moyen d'accumulation intermédiaire disposé en aval du convoyeur de sortie. Cela est particulièrement utile lorsque le transfert de sortie est assuré par un convoyeur d'accumulation perpendiculaire. Le convoyeur de sortie peut être arrêté pour recevoir une rangée d'objets. Durant cet arrêt, la machine aval de traitement des objets peut être alimentée en objets en puisant dans l'accumulation intermédiaire disposée en aval du convoyeur de sortie. La vitesse d'éjection de la rangée d'objets arrivée sur le convoyeur de sortie permet de reconstituer cette accumulation intermédiaire. Autrement dit, l'accumulation intermédiaire en aval du convoyeur de sortie permet de boucher les éventuels espaces entre les différents trains d'objets constitués par les rangées successives sortant du convoyeur d'accumulation.

Avantageusement, le moyen d'accumulation intermédiaire comprend un convoyeur intermédiaire à tapis lisse, suivi d'un dispositif de freinage.

Selon un mode de réalisation, si le manipulateur robotisé constitue le premier moyen de transfert, la tête de manipulation est conçue pour saisir le lot d'objets à transférer avec une vitesse de la tête de manipulation identique à une vitesse de convoyage du convoyeur d'amenée.

Selon un mode de réalisation, si le manipulateur robotisé constitue le deuxième moyen de transfert, la tête de manipulation est conçue pour déposer le lot d'objets transférés avec une vitesse de la tête de manipulation identique à une vitesse de convoyage du convoyeur de sortie.

Les deux modes de réalisation ci-dessus permettent de convoyer et d'accumuler des objets instables sans avoir besoin d'arrêter le convoyeur d'amenée ou de sortie correspondant. Ce mode de réalisation convient particulièrement pour un dispositif où les deux moyens de transfert comprennent chacun une tête de manipulation. Le mode de réalisation à deux robots convient également pour accumuler des objets non empilables tels que des objets de forme oblongue.

Selon un autre mode de réalisation, le deuxième moyen de transfert comprend un manipulateur robotisé, qui peut être le même que le manipulateur du premier moyen de transfert, mais est de préférence un manipulateur distinct. Les objets sont disposés en rangée sur la surface d'accumulation et le convoyeur de sortie est un convoyeur multivoies. La tête de manipulation du manipulateur robotisé comprend au moins un poussoir. Le manipulateur robotisé exerce alors une force de poussée sur un nombre de rangées d'objets supérieur à deux.

Il est ainsi possible de passer d'un convoyeur d'amenée à une seule voie à un convoyeur de sortie multivoies sans l'ajout d'un dispositif supplémentaire de type aiguilleur.

Par exemple, le manipulateur robotisé exerce une force de poussée sur un nombre de rangées d'objets correspondant au nombre de voies du convoyeur de sortie, de manière à remplir toutes les voies du convoyeur de sortie en une seule opération du robot.

Selon un autre aspect, l'invention porte sur un procédé de transfert de lots d'objets depuis un convoyeur d'amenée jusqu'à un convoyeur de sortie, avec les caractéristiques techniques de la revendication 11.

Avantageusement, chacun des premier et deuxième moyens de transfert est synchronisé en débit d'objets avec le convoyeur correspondant, d'amenée ou de sortie.

Avantageusement, on arrête le convoyeur d'amenée lorsque le lot d'objets est transféré depuis ledit convoyeur et on accélère le convoyeur d'amenée jusqu'à une survitesse de rattrapage pour que le débit moyen de transfert soit égal au débit moyen d'amenée.

Avantageusement, on arrête le convoyeur de sortie lorsque le lot d'objets est transféré sur ledit convoyeur et on accélère le convoyeur de sortie jusqu'à une survitesse de rattrapage pour que le débit moyen de transfert soit égal au débit moyen de sortie.

### BREVE DESCRIPTION DES DESSINS

La présente invention sera mieux comprise à l'étude de la description détaillée de quelques modes de réalisation pris à titre d'exemples nullement limitatifs et illustrés par les dessins annexés sur lesquels :
- la figure 1 est une vue de dessus d'un mode de réalisation du dispositif d'accumulation et de convoyage,
- les figures 2 et 3 sont des coupes, respectivement selon les plans II-II et III-III de la figure 1,
- les figures 4a, 4b, 4c illustrent un dispositif d'amenée des objets depuis une machine amont, et respectivement, trois étapes du procédé de transfert correspondant,
- les figures 5a, 5b, 5c illustrent un dispositif de sortie vers une machine aval et, respectivement trois étapes du procédé de transfert correspondant,
- la figure 6 est une vue en perspective d'un deuxième mode de réalisation du dispositif d'accumulation et de convoyage,
- les figures 7 et 8 sont des vues de dessus d'un autre mode de réalisation du dispositif d'accumulation et de convoyage, et respectivement, illustrent deux étapes du transfert correspondant, et
- la figure 9 est une représentation schématique, vue de dessus, d'une ligne de fabrication muni d'accumulateurs.

### DESCRIPTION DETAILLEE

Une machine **M1** amont et une machine **M2** aval traitent l'une et l'autre, et indépendamment l'une de l'autre, des objets **1** disposés sur une file. Un dispositif **2** d'accumulation et de convoyage est disposé entre les machines M1 et M2. Le dispositif 2 d'accumulation et de convoyage comprend successivement : un convoyeur **3** amont, un convoyeur **4** intermédiaire amont, deux chenillettes **5** de freinage amont, un convoyeur **6** d'amenée, un convoyeur **7** d'accumulation, un convoyeur **8** de sortie, un convoyeur **9** intermédiaire aval, deux chenillettes **10** de freinage aval et un convoyeur **11** aval.

Le convoyeur 3 amont et le convoyeur 4 intermédiaire amont sont dans l'alignement l'un de l'autre et raccordés, par exemple, par une plaque **12** de raccordement. Le convoyeur 4 intermédiaire amont et le convoyeur 6 d'amenée sont parallèles et côte à côte sur une zone **15a** axiale de recouvrement. Les deux chenillettes 5 de freinage amont sont disposées en travers des deux convoyeurs 4, 6, au-dessus de la zone 15a axiale de recouvrement. Deux guides **13** latéraux s'étendent de chaque côté du convoyeur 4 intermédiaire amont sur toute la longueur de ce convoyeur, en amont des deux chenillettes 5 de freinage amont et séparés l'un de l'autre d'une distance correspondant à la largeur des objets 1.

Les deux chenillettes 5 de freinage amont présentent chacune une face **5c** active. Les deux faces 5c actives sont parallèles, en regard l'une de l'autre, s'étendent verticalement et sont séparées d'une distance correspondant à la largeur des objets 1. Des extrémités **5a** amont des deux faces actives 5c sont disposées au-dessus d'une portion amont de la zone 15a axiale de recouvrement, de part et d'autre de la largeur du convoyeur 4 intermédiaire amont. Des extrémités **5b** aval des faces actives 5c sont disposées au-dessus d'une portion aval de la zone 15a axiale de recouvrement, de part et d'autre de la largeur du convoyeur 6 d'amenée.

Le convoyeur 7 d'accumulation présente une direction de convoyage, dite direction d'accumulation. Une extrémité **7a** amont du convoyeur 7 d'accumulation est adjacente à une portion **6b** aval du convoyeur 6 d'amenée et s'étend le long de la portion 6b. Une extrémité **7b** aval du convoyeur 7 d'accumulation, opposée à l'extrémité 7a amont selon la direction d'accumulation, est adjacente à une portion **8a** amont du convoyeur 8 de sortie et s'étend le long de la portion 8a. La portion 6b aval du convoyeur 6 d'amenée s'étend dans une première direction de convoyage et la portion 8a amont du convoyeur 8b de sortie s'étend dans une deuxième direction de convoyage. La direction d'accumulation est inclinée par rapport à la première direction de convoyage et/ou par rapport à la deuxième direction de convoyage. Selon un mode de réalisation, qui est celui des figures et qui sera décrit ci-après, la direction d'accumulation est perpendiculaire à la première direction de convoyage et à la deuxième direction de convoyage, les deux directions de convoyage étant alors parallèles.

Le convoyeur 8 de sortie et le convoyeur 9 intermédiaire aval sont parallèles et côte à côte l'un de l'autre, le long d'une portion **8b** aval du convoyeur 8 de sortie. Un déflecteur **14** s'étend verticalement, en travers de la portion 8b aval, et orienté de façon qu'un objet 1, entraîné par le convoyeur 8 de sortie, soit poussé contre le déflecteur 14, et soit dévié sur le convoyeur 9 intermédiaire aval.

Le convoyeur 9 intermédiaire aval et le convoyeur 11 aval sont parallèles et côte à côte l'un de l'autre le long d'une zone **15b** axiale de recouvrement, en aval du convoyeur 9 intermédiaire aval, et en amont du convoyeur 11 aval. Les chenillettes 10 de freinage aval présentent les caractéristiques structurelles identiques à celles décrites précédemment pour les chenillettes 5 de freinage aval. Leur orientation inclinée permet de guider et retenir des objets 1 arrivant du convoyeur 9 intermédiaire aval vers le convoyeur 11 aval.

Un guide **16** latéral prolonge le déflecteur 14 tout le long du convoyeur 9 intermédiaire aval jusqu'aux chenillettes 10 de freinage aval. Un autre guide 16 latéral s'étend du côté latéral opposé du convoyeur 9 intermédiaire aval, à une distance de celui-ci correspondant à la largeur des objets 1.

Le dispositif 2 comprend un premier moyen de transfert d'une rangée d'objets depuis le convoyeur 6 d'amenée jusque sur une surface **27** d'accumulation sur le dessus du convoyeur 7. Il comprend un deuxième moyen de transfert depuis la surface 27 d'accumulation jusque sur le convoyeur 8 de sortie.

Plus précisément, la surface 27 d'accumulation comprend un côté amont, adjacent à la portion 6b aval du convoyeur 6 d'amenée, et un côté aval, adjacent à la portion 8a amont du convoyeur 8 de sortie, et opposé au côté amont selon la direction d'accumulation. Ainsi, le premier moyen de transfert amène une rangée d'objet depuis la portion 6b aval du convoyeur 6 d'amenée sur le côté amont de la surface 27 d'accumulation, et le deuxième moyen de transfert amène une rangée d'objet depuis le côté aval de la surface 27 d'accumulation sur la portion 8a amont du convoyeur 8 de sortie. Dans le mode de réalisation particulier dans lequel la surface 27 d'accumulation est portée par le convoyeur 7 d'accumulation, le côté amont de la surface 27 d'accumulation s'étend depuis l'extrémité 7a amont du convoyeur 7 et le côté aval de la surface 27 d'accumulation s'étend depuis l'extrémité 7b aval du convoyeur 7

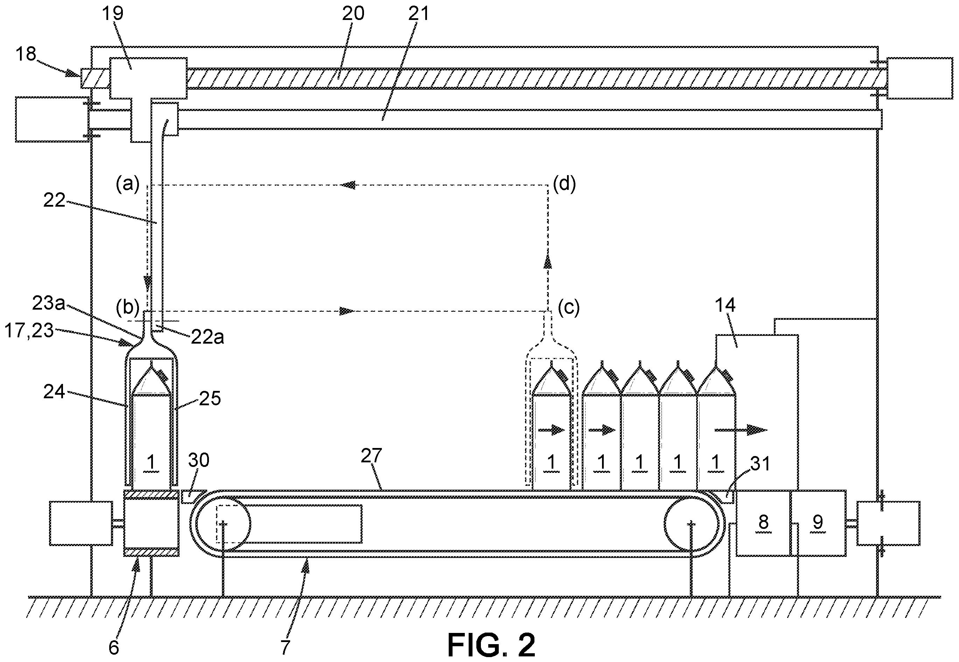

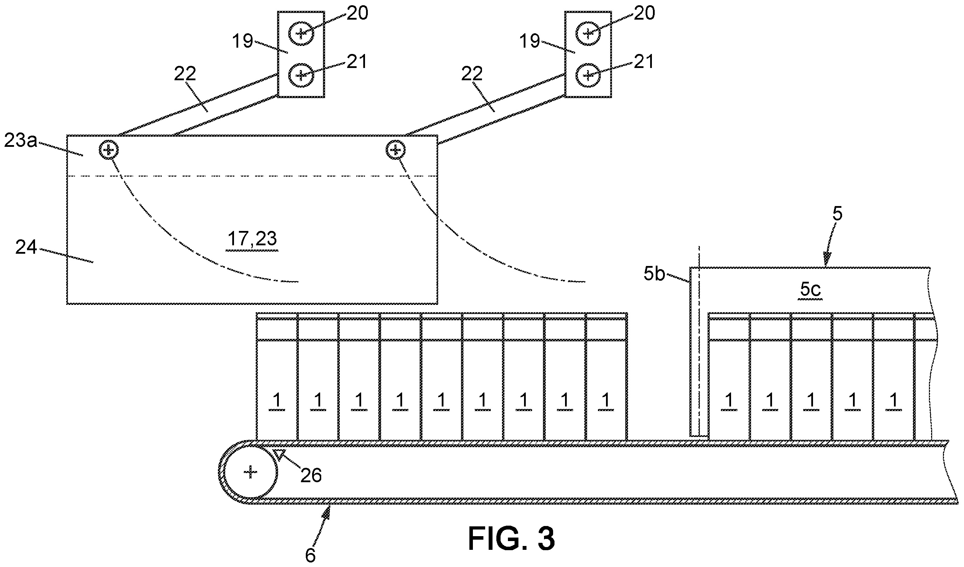

Le premier moyen comprend un robot **18** équipé d'une tête **17** de manipulation mobile au moins horizontalement, au moins selon la direction de convoyage. Comme illustré en figures 2 et 3, le robot 18 comprend deux blocs **19** de translation, montés chacun sur, et entraînés par, une tige **20** de guidage filetée. Chacun des deux blocs 19 de translation est également traversé par une tige **21** auxiliaire, parallèle à la tige 20 correspondante. Chacun des blocs 19 est également muni d'une bielle **22** entraînée en rotation par une clavette non représentée de la tige 21 auxiliaire. Une extrémité **22a** de chacune des bielles 22 est montée en rotation sur une partie **23a** supérieure d'une coiffe **23.** La coiffe 23 présente une section droite selon un plan vertical parallèle à la direction de convoyage du convoyeur 7 d'accumulation. Ladite section droite a une forme en U ouverte vers le bas. La coiffe 23 présente un premier flanc **24** situé d'un côté amont, c'est-à-dire du côté extérieur du dispositif 2 et un deuxième flanc **25** situé d'un côté aval du convoyeur 7 d'accumulation.

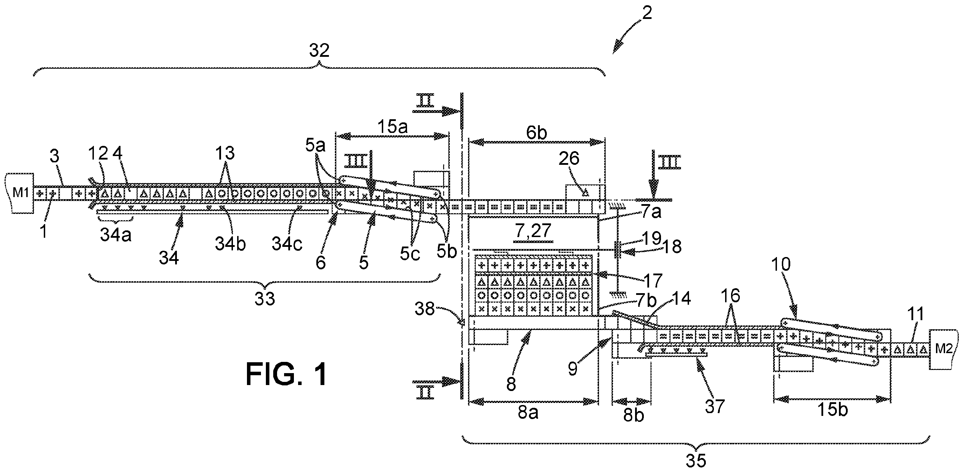

On va maintenant à l'aide des figures 1, 2, 3, 4a décrire le fonctionnement du robot 18. Dans une position (a) figure 2, la tête 17 de manipulation est en position escamotée, telle qu'illustrée en figure 3. A partir de cette position (a) initiale, un cycle de transfert est initialisé lorsqu'un capteur **26** détecte qu'une rangée est arrivée en position sur la porion 6b aval du convoyeur 6 d'amenée, prête à être prise en charge. La tige 21 est alors actionnée pour faire descendre la tête 17 de manipulation dans une position (b) active, illustrée en trait plein figure 2. Pendant la descente, et avant l'arrivée en position (b) active, le convoyeur 6 d'amenée est arrêté. Quand la tête 17 de manipulation est en position (b) active, la tige 20 filetée est actionnée afin de déplacer latéralement la tête 17 de manipulation jusque dans une position (c) de destination du premier transfert. Cette position (c) de destination est située sur une face supérieure du convoyeur 7 d'accumulation, qui est la partie de la surface du convoyeur 7 d'accumulation utilisable pour accumuler des objets 1, formant la surface 27 d'accumulation. La position (c) de destination est illustrée en pointillés sur la figure 2. Elle est située sensiblement derrière la rangée qui avait été amenée précédemment.

Une unité **28** de commande, qui est reliée à une batterie de capteurs **29** détecte la présence de rangées d'objets sur la surface 27 d'accumulation. L'unité 28 de commande détermine alors un taux d'occupation en cours de la surface 27 d'accumulation. Elle en déduit la position de la dernière rangée présente sur la surface 27 d'accumulation et calcule ainsi la position (c) de destination où le robot 18 doit amener la rangée d'objets.

Le robot 18 imprime une accélération à la tête 17 de manipulation au cours de laquelle les objets 1 sont poussés par le premier flanc 24 amont de la coiffe 23.

Dans l'exemple illustré, la coiffe 23 ne soulève pas la rangée d'objets 1 transférée. Les objets 1 glissent le long d'un plan de transfert qui s'étend depuis le convoyeur 6 amont jusque sur le convoyeur 7 d'accumulation en passant sur une plaque **30** de transfert. Le deuxième flanc 25 aval de la coiffe 23 permet au robot d'imposer une décélération rapide de la rangée d'objets transférée sans risquer que les objets 1 ne tombent. Cela permet d'accélérer le premier transfert et de réduire le temps de cycle. Cela peut permettre au dispositif 2 d'accumulation et de convoyage d'accepter des débits d'amenée élevés des objets 1.

Une fois arrivée en position (c) de destination, la tige 21 est de nouveau actionnée pour relever la tête 17 de manipulation jusqu'en position (d) escamotée dans laquelle ladite tête est entièrement au-dessus du sommet des objets 1. Cela permet alors d'actionner la tige 20 pour ramener la tête 17 de manipulation en position (a) initiale.

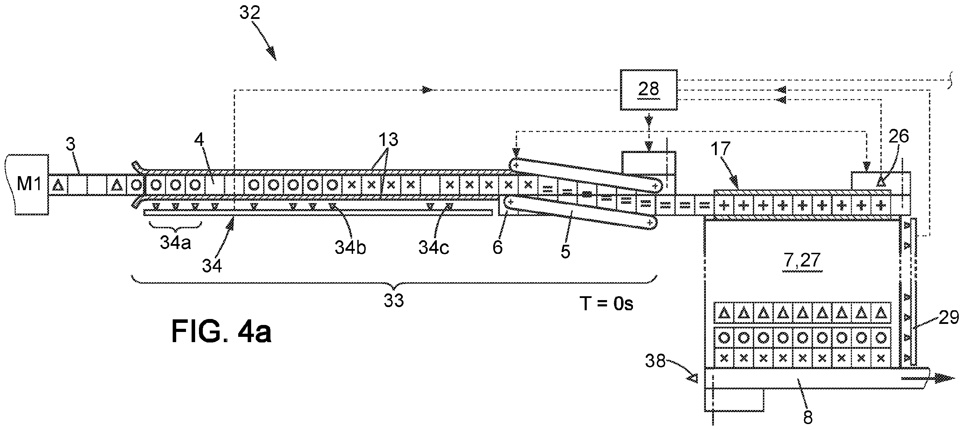

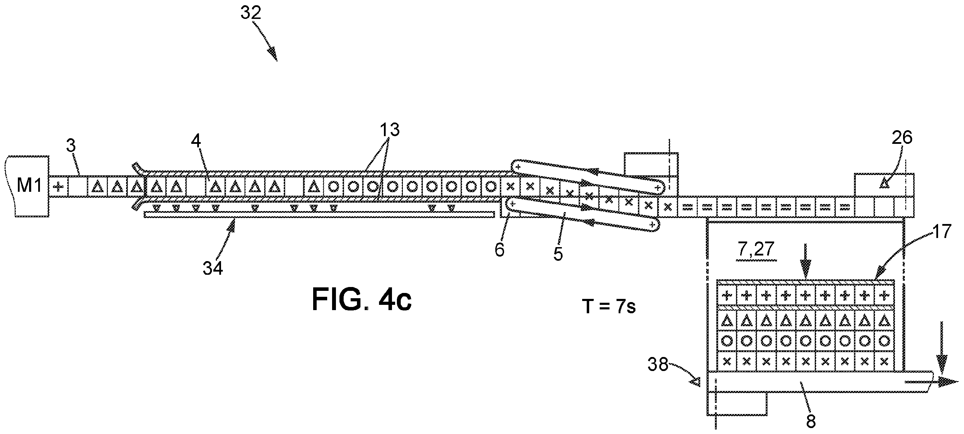

Comme illustré en figure 4a, l'existence du deuxième flanc 25 aval a comme conséquence que la rangée venant d'être transférée (illustrée avec des "Δ") n'est pas en contact avec la rangée transférée précédemment (illustrée avec des "○"). Il subsiste un espace qui va être comblé lors du transfert de la rangée suivante (illustrée en figure 4c avec des "+"). Lors du transfert de la rangée illustrée par des "+", le flanc 25 aval sert, non seulement à retenir la rangée transférée (avec des "+"), mais également à pousser la rangée précédente (avec des "Δ"). Autrement dit, la position (c) de destination de la rangée transférée (avec des "+"), est précisément calculée pour repousser la rangée précédente (avec des "Δ") en contact avec celle encore précédente (avec des "○").

On comprend que le premier transfert par le robot 18 présente de nombreuses variantes, dont la plupart sont indépendantes et peuvent se cumuler. Par exemple, dans une variante, la direction de convoyage du convoyeur d'amenée peut ne pas être perpendiculaire à celle du convoyeur d'accumulation. La plaque 30 de transfert peut être triangulaire et le robot peut faire pivoter la tête 17 de manipulation.

Dans une autre variante, la tête 17 de manipulation peut être une pince, apte à soulever les objets transférés. En particulier, les convoyeurs peuvent ne pas être coplanaires.

Dans une autre variante, la tête 17 de manipulation peut être dépourvue du deuxième flanc 25 aval.

Dans encore une autre variante, le robot 18 peut entraîner la tête 17 de manipulation par des moyens très différents des tiges 20 et 21, tels que ceux utilisés dans les robots multiaxes.

On comprend que le premier transfert est indépendant du deuxième transfert. La position (c) de destination des rangées d'objets par le premier transfert est calculée en tenant compte de l'éventuel déplacement du tapis rotatif du convoyeur 7 d'accumulation. Le taux d'accumulation en cours, qui sert de consigne au robot 18, est celui qui sera pertinent à l'instant où le robot 18 remontera la tête 17 de manipulation. Toutefois, il peut être avantageux que le robot 18 attende que le tapis du convoyeur 7 d'accumulation soit arrêté pour remonter la tête 17 de manipulation.

Entre l'étape du cycle précédent correspondant à la position (d) et l'étape du cycle suivant où la tête 17 de manipulation est en position (c) de destination, le convoyeur 7 d'accumulation peut avoir alimenté le convoyeur 8 de sortie avec un débit d'objets supérieur, égal ou inférieur au débit d'objets du premier transfert. Le dispositif 2 d'accumulation et de convoyage sera alors, dans son ensemble, en phase respectivement de vidage, de croisière ou d'accumulation. En phase d'accumulation, le convoyeur 7 d'accumulation peut être complètement arrêté alors que le robot 18 continue d'amener des rangées d'objets 1.

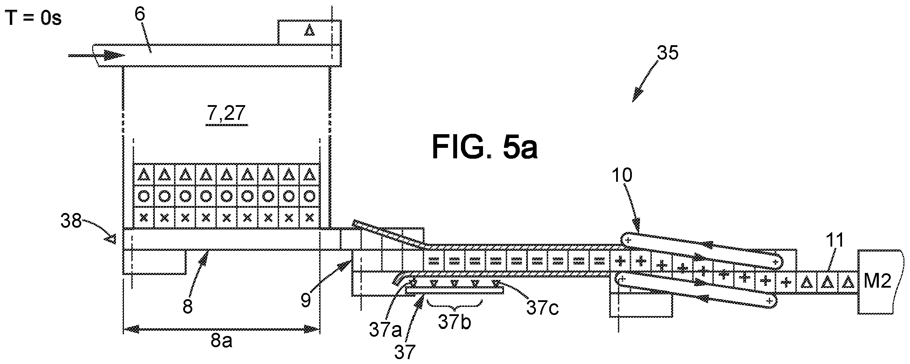

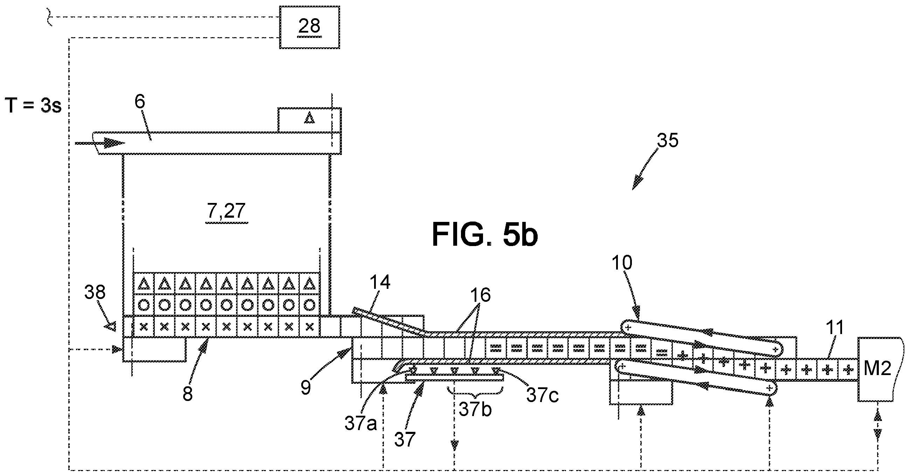

On va maintenant décrire le deuxième moyen de transfert à l'aide des figures 2, 5a, 5b. Le transfert des objets 1 depuis le convoyeur 7 d'accumulation jusque sur le convoyeur 8 de sortie se fait, rangée par rangée, par simple friction des objets sur le tapis rotatif du convoyeur 7 d'accumulation. Ainsi, la rangée d'objets la plus proche du convoyeur 8 de sortie (illustrée par des "x" en figure 5a), c'est-à-dire sur le côté aval de la surface 27 d'accumulation, est poussée par les rangées qui la suivent et sont encore sur le tapis rotatif du convoyeur 7 d'accumulation (illustrées par des "○" et des "Δ"). L'effet de poussée permet à la dernière rangée, la plus proche du convoyeur 8 de sortie, de glisser le long d'un plan de deuxième transfert, sur une plaque **31** de transfert puis sur le convoyeur 8 de sortie, et plus précisément de la portion 8a amont du convoyeur 8 de sortie, qui peut être un tapis rotatif. Dans le cas où le tapis rotatif des convoyeurs 7 et 8 présente un coefficient de frottement similaire, il faut que le nombre de rangées sur le convoyeur 7 d'accumulation soit en permanence supérieur ou égal à deux, voire supérieur ou égal à trois, pour que cet effet de poussée soit suffisant pour vaincre la friction subie par la rangée arrivant sur le convoyeur 8 de sortie. La capacité d'accumulation du dispositif 2 d'accumulation et de convoyage correspond à la différence entre le nombre maximal de rangées logeables sur le convoyeur 7 d'accumulation moins le nombre minimal de rangées devant rester en permanence sur le convoyeur 7 d'accumulation.

En variante, le robot 18 peut être utilisé comme deuxième moyen de transfert. Ainsi, dans cette variante, le robot 18 peut se déplacer le long de la même tige 20 de guidage filetée pour que la tête 17 de manipulation pousse les objets depuis la surface 27 d'accumulation sur le convoyeur 8 de sortie. Le convoyeur d'accumulation 7 en tant que tapis rotatif devient alors superflu, puisque la tête 17 de manipulation entraîne les objets, et on pourra remplacer le convoyeur 7 d'accumulation par une table d'accumulation fixe. En outre, le robot 18 pousse chaque rangée d'objets, de sorte que la rangée d'objet la plus proche du convoyeur de sortie 8 n'a pas besoin d'être poussée par les rangées qui la suivent sur la surface 27 d'accumulation. Il s'en suit qu'il n'y a plus de contrainte quant à un nombre de rangées devant être en permanence sur le convoyeur 7, la force exercée par le robot 18 sur les objets étant déterminée pour être toujours suffisante.

Il est entendu que le robot 18 peut être mis en oeuvre comme premier moyen de transfert et comme deuxième moyen transfert, ou qu'un premier robot fait office de premier moyen de transfert et un deuxième robot, distinct et indépendant du premier, fait office de deuxième moyen de transfert, comme il sera vu plus loin.

La direction de convoyage du convoyeur 7 d'accumulation, ou celle de poussée du robot 18, et celle du convoyeur 8 de sortie sont perpendiculaires. Dans une variante, elles peuvent présenter une légère inclinaison par rapport à la perpendiculaire d'un angle inférieur à 10°, voire inférieur à 5°. Cela peut permettre que tous les objets 1 d'une rangée transférée ne franchissent pas en même temps la transition entre la plaque 30 et le convoyeur 8 de sortie. De manière alternative, cette légère déviation par rapport à la perpendiculaire peut résulter de la disposition des rangées d'objets déposées par la tête 17 de manipulation.

On va à l'aide des figures 4a à 4c décrire un dispositif **32** d'amenée des objets 1 entre la machine M1 amont et le convoyeur 7 d'accumulation. Dans le mode de réalisation illustré, la coiffe 23 est ouverte de chaque côté. Il faut que le convoyeur 6 d'amenée soit arrêté lors de la transition entre les convoyeurs 6 et 7.

Le dispositif 32 d'amenée inclut un moyen 33 d'accumulation intermédiaire disposé en amont du convoyeur 6 d'amenée. Plus précisément, le moyen 33 d'accumulation intermédiaire est disposé en amont de la portion du convoyeur 6 d'amenée contenant le lot d'objets transféré par le premier moyen de transfert. Cela peut correspondre à la portion du convoyeur 6 d'amenée en regard du convoyeur 7 d'accumulation.

Le moyen 33 d'accumulation intermédiaire permet d'accumuler les objets reçus de la machine M1 amont pendant l'arrêt du convoyeur 6 d'amenée. Cela permet aussi de boucher les éventuels "trous" causés par des objets manquants en sortie de la machine M1 amont. Cela permet de garantir que les rangées d'objets 1 prises en charge par la tête 17 de manipulation soient "pleines", c'est-à-dire, sans objets manquants ou espacés l'un de l'autre.

Le moyen 33 d'accumulation intermédiaire peut être réalisé de multiples manières. Dans le mode de réalisation illustré, il est constitué par le convoyeur 4 intermédiaire amont, les guides 13 latéraux, le couple de chenillettes 5 de freinage et une barrette **34** de capteurs de détection de présence. La barrette 34 s'étend le long des guides 13 latéraux et comprend, de l'amont jusque vers l'aval : un capteur **34a** de remplissage excessif, un capteur **34b** de remplissage seuil et un capteur **34c** de défaut. De manière alternative, la barrette 34 de capteurs peut être remplacée par un capteur unique et un registre à décalage recevant une information d'avancement du tapis. Le registre à décalage contient l'information de présence des objets tout le long des guides 13 latéraux.

En début d'un cycle de transfert (T = 0 s, figure 4a), le capteur 26 a détecté l'arrivée de la rangée (illustrée avec des "+"). L'unité 28 de commande arrête alors le convoyeur 6 d'amenée ainsi que les chenillettes 5 de freinage pendant que le convoyeur 4 intermédiaire amont continue à convoyer les objets 1 avec une survitesse de convoyage. La survitesse est supérieure au produit du débit moyen de la machine M1 amont multiplié par la longueur d'un objet 1. Le coefficient de survitesse des convoyeurs 3 amont et 4 intermédiaire est régulé automatiquement par l'unité 28 de commande en fonction des signaux reçus par la barrette 34 de capteurs.

A l'instant initial de début du premier transfert illustré en figure 4a, les capteurs 34a et 34b de remplissage peuvent avoir détecté un ou plusieurs objets manquants. Cependant, le capteur 34c de défaut doit n'avoir détecté aucun objet manquant. Les objets 1 sont bloqués par les chenillettes 5. Les objets poussés par le convoyeur 4 intermédiaire s'accumulent progressivement en restant en ligne grâce aux guides latéraux 13.

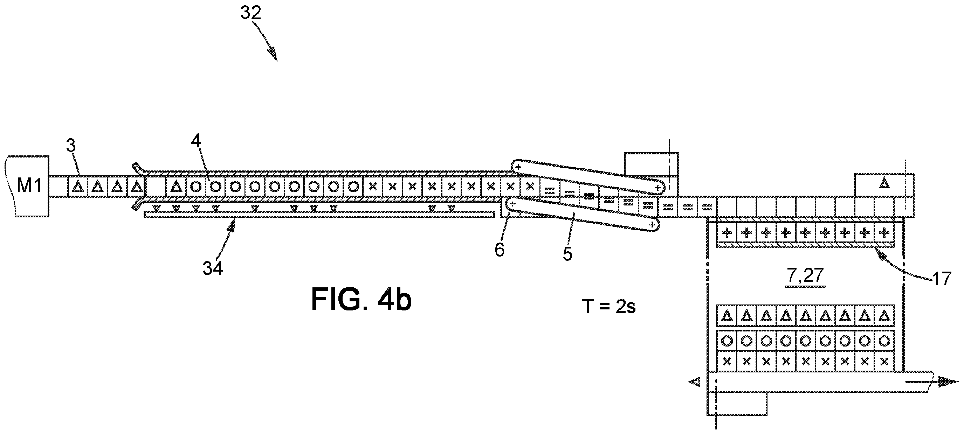

Comme illustré en figure 4b, la tête 17 de manipulation a amené la rangée (illustrée avec des "+") sur la portion amont de la surface 27 d'accumulation. A ce moment, l'unité 28 de commande attend que la barrette 34 de capteurs indique que l'accumulation est au moins remontée en amont du capteur 34b de remplissage seuil, pour autoriser le redémarrage du convoyeur 6 d'amenée et des chenillettes 5 de freinage (figure 4c). Cela permet de garantir qu'aucun "trou" n'arrive au capteur 34c de défaut en cours du cycle de premier transfert. Une absence de "trous" entre les capteurs 34a de remplissage excessif et le capteur 34b de remplissage seuil indique que la survitesse du convoyeur 4 intermédiaire doit être augmentée. Cette survitesse peut être augmentée tant que la tête 17 de manipulation revient en position (a) initiale avant que les objets 1 ne soient détectés par le capteur 26. Inversement, un excès de "trous" entre le capteur 34a de remplissage excessif et le capteur 34b de remplissage seuil indique une survitesse excessive que l'on peut réduire pour limiter les frottements sur le tapis du convoyeur 4 intermédiaire.

On comprend que le dispositif 33 d'accumulation intermédiaire en amont du convoyeur 6 d'amenée peut présenter de nombreuses variantes. Par exemple, les chenillettes 5 de freinage amont peuvent être remplacées par un bloqueur d'objets situé sur le convoyeur 4 intermédiaire amont. Ce bloqueur peut être constitué par des guides latéraux mobiles pressant latéralement les objets 1. Un déflecteur peut alors guider les objets 1 sur le convoyeur 6 d'amenée lorsqu'ils sont libérés par le bloqueur.

On va, à l'aide des figures 5a à 5c, décrire un dispositif **35** de sortie qui comprend un moyen **36** d'accumulation intermédiaire disposé entre le convoyeur 8 de sortie et la machine M2 aval. Dans l'exemple illustré, le moyen 36 d'accumulation intermédiaire est constitué du convoyeur 9 intermédiaire aval, du déflecteur 14, des guides latéraux 16, des chenillettes 10 de freinage aval et d'une barrette **37** de capteurs comprenant un capteur **37a** de remplissage excessif, des capteurs **37b** de zone de fluctuation et un capteur **37c** de défaut. Au début d'un cycle de transfert de sortie (illustré en figure 5a), la portion 8a amont du convoyeur 8 de sortie doit être entièrement vide pour recevoir une nouvelle rangée (illustrée avec des "x"). Le convoyeur 8 de sortie est arrêté. Les chenillettes 10 de freinage aval sont directement synchronisées avec le convoyeur 11 aval et avec la machine M2 aval, afin de pouvoir les alimenter par des objets 1 en contact les uns à la suite des autres en fonction de ce que demande la machine M2 aval.

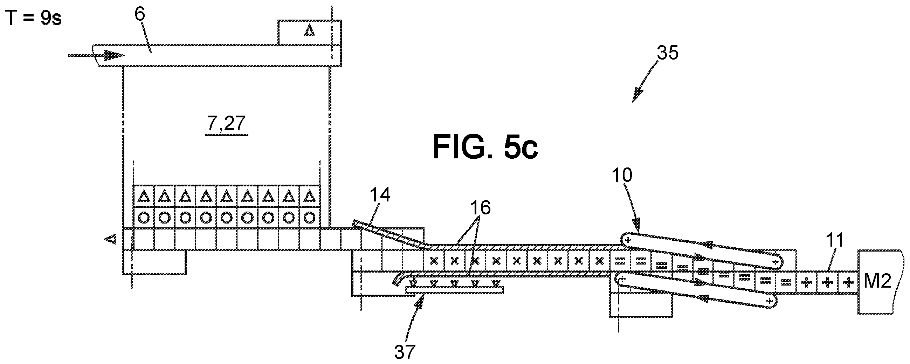

Le cycle de transfert de sortie comprend deux phases, une phase d'arrivée sur le convoyeur de sortie (figure 5b) et une phase de rattrapage du retard (figure 5c). Dans l'exemple illustré, si le débit moyen de la deuxième machine M2 est de 1 objet/seconde, la durée pour que la rangée transférée (illustrée par des "x") arrive sur le convoyeur 8 de sortie est de 3 secondes. Cela est détecté par un capteur **38** d'arrivée. Durant ce temps, les chenillettes 10 de freinage aval ont envoyé trois objets vers la machine M2. Les capteurs 37b de zone de fluctuation passent de 1 à 0 et le capteur 37c de défaut reste à 1.

Dans la phase de rattrapage, le convoyeur 8 de sortie et le convoyeur 9 intermédiaire aval avancent tous les deux avec une survitesse identique. Cette survitesse est déterminée par l'unité 28 de commande de manière que, durant le temps restant (6 secondes) du cycle de transfert, la rangée transférée (illustrée en "x") arrive à la suite de la rangée précédente (illustrée en "=") et prenne la place qu'avait initialement cette rangée (figures 5a, 5c). Cela est détecté par le fait que le capteur 37a de remplissage excessif revient à zéro après avoir vu passer toute la rangée transférée (illustrée en "x") et que les capteurs 37b de zone de fluctuation sont revenus à 1.

Dans une variante, les chenillettes 5 et 10 de freinage peuvent être remplacées par un tapis frein horizontal sans que les objets ne soient déportés latéralement entre les convoyeurs 4 et 6, et/ou entre les convoyeurs 9 et 11.

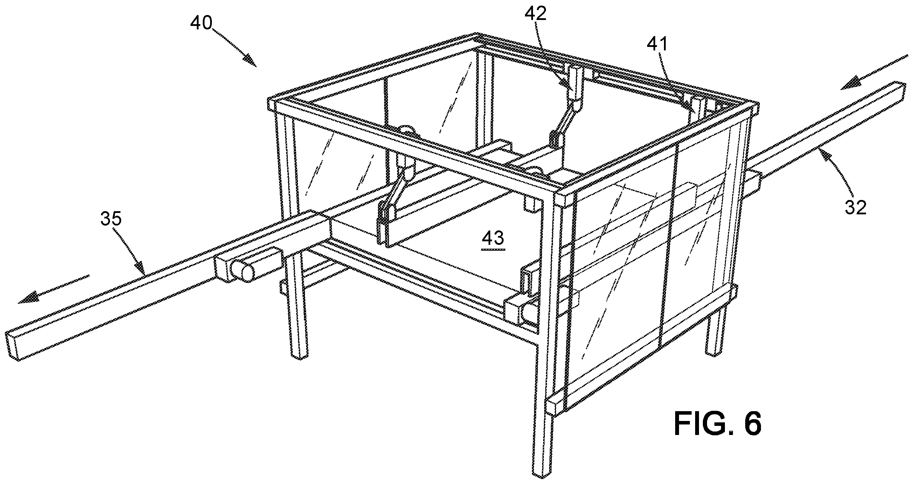

Comme illustré en figure 6, un dispositif **40** d'accumulation et de transfert présente un premier robot **41** identique au robot 18 précédent, et un deuxième robot **42** assurant le deuxième transfert depuis une table **43** d'accumulation fixe jusque sur un convoyeur de sortie. Ce mode de réalisation permet d'augmenter le rapport de la surface utile d'accumulation sur la surface d'implantation du dispositif 40. En effet, la totalité de la surface de la table 43 d'accumulation peut servir à accumuler des objets.

Une variante du dispositif 40 d'accumulation et de convoyage comprend des robots 41 et 42 ayant chacun trois axes de déplacement. La tête de manipulation du premier robot 41 peut aller chercher la rangée d'objets à transférer sur le convoyeur d'amenée de manière qu'à l'instant où la tête de manipulation prend en charge la rangée, la tête avance à la vitesse du convoyeur d'amenée. Ainsi, le transfert peut se faire sans arrêter le convoyeur d'amenée. De même, le deuxième robot 42 peut disposer la rangée transférée sur le convoyeur de sortie sans que ce dernier ne soit arrêté.

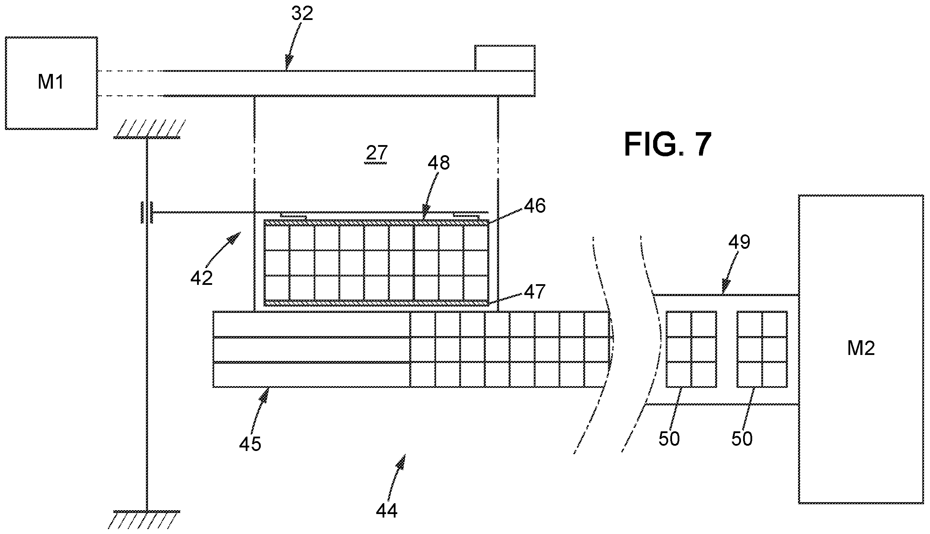

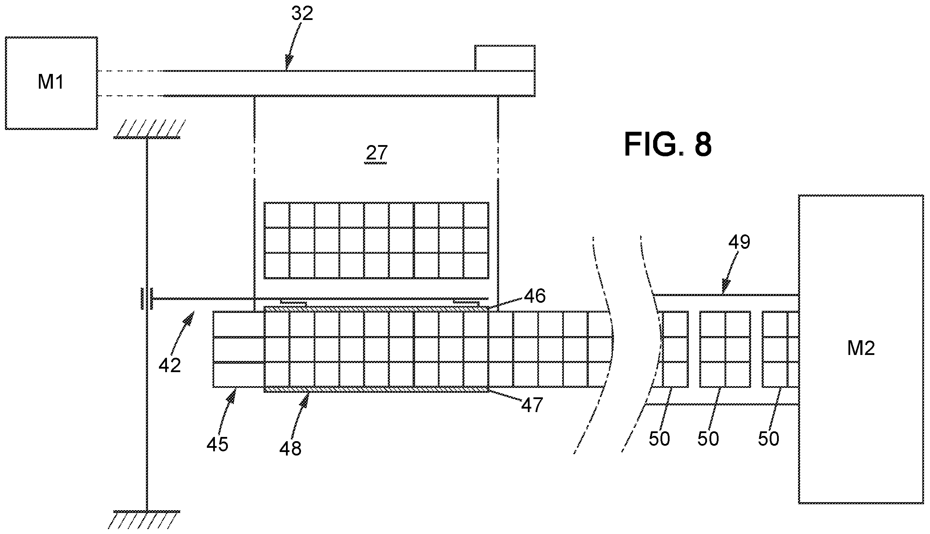

On va, à l'aide des figures 7 et 8, décrire un dispositif de transfert vers un dispositif **44** de sortie multivoies alimentant une machine M2 aval, par exemple de type fardeleuse. Le dispositif d'amenée 32 est par exemple similaire à celui décrit ci-dessus. Le dispositif 44 de sortie comprend un convoyeur 45 formant une pluralité de voies, en l'occurrence trois voies sur les figures 7 et 8.

On a représenté sur la figure 7 le cas où trois rangées d'objets sont disponibles sur la surface d'accumulation 43. Le deuxième robot 42 peut alors déplacer au moins deux rangées d'objets, le nombre de rangées déplacées par le deuxième robot 42 correspondant par exemple au nombre de voies disponibles sur le convoyeur 45 de sortie, c'est-à-dire trois sur l'exemple illustré. A cet effet, les flancs **46, 47** de la tête **48** de manipulation du deuxième robot 42 sont à distance l'un de l'autre de manière à pouvoir venir de part et d'autre des rangées d'objet. Le deuxième robot 42 imprime une accélération à la tête 48 de manipulation, pour que le flanc 46 amont pousse les rangées d'objets sur le convoyeur de sortie. Le flanc 47 aval permet par exemple de retenir les objets pour éviter qu'ils ne tombent lors de la poussée par le flanc 46 amont, et également pour pouvoir décélérer les objets une fois positionnés sur le convoyeur 45 de sortie.

La vitesse de déplacement du deuxième robot 42 est réglée en fonction de la vitesse du convoyeur 45 de sortie, de sorte que les voies du convoyeur 45 de sortie soient libres pour recevoir les objets poussés par le deuxième robot 42 à chaque cycle. Ainsi, le convoyeur 45 de sortie n'a pas besoin d'être arrêté.

On pourra également prévoir que le convoyeur 45 de sortie comprenne plus de voies que le nombre de rangées déplacées par le deuxième robot 42. Dans ce cas, la vitesse de déplacement du deuxième robot 42 est là encore adaptée pour assurer l'alimentation en continue de la fardeleuse M2 sur l'ensemble des voies.

Le convoyeur 45 de sortie est prolongé par un convoyeur **49** d'entrée de la fardeleuse M2. Entre le convoyeur 45 de sortie et le convoyeur 49 d'entrée de la fardeleuse, le dispositif 44 de sortie comprend des moyens, non représentés, de formation de lots 50. Ainsi, les objets arrivent par lot 50 dans la fardeleuse M2.

La mise en place d'un convoyeur 45 multivoies en sortie de la table d'accumulation permet de s'affranchir d'un dispositif d'aiguillage pour passer d'une voie de convoyage à plusieurs voies de convoyage.

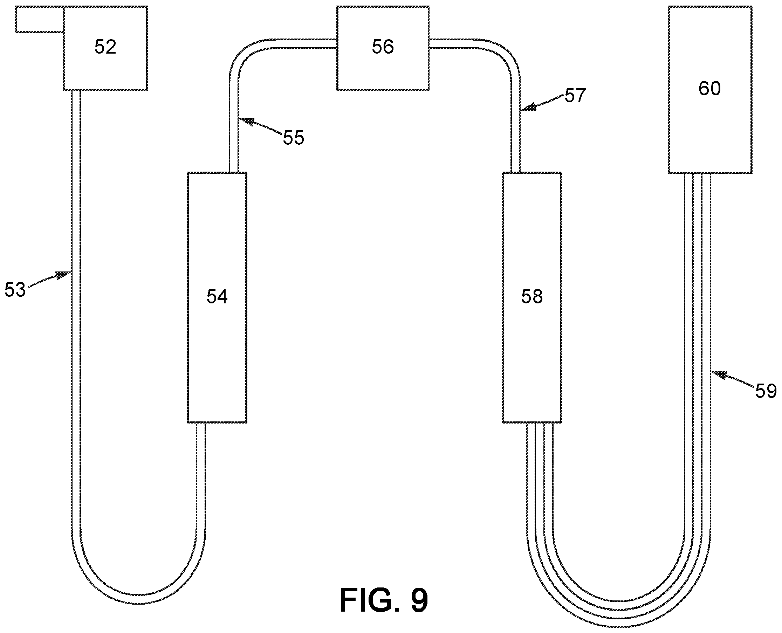

L'encombrement de l'installation globale s'en trouve diminué. Ainsi, par exemple, pour une ligne 51 de production de récipients en matière plastique comme illustrée sur la figure 9 de manière schématique, la ligne 51 peut comprendre successivement :
- un poste 52 de soufflage et de remplissage dans lequel les récipients sont formés et remplis,
- un premier convoyeur 53 à une seule voie,
- un premier dispositif 54 d'accumulation, les récipients arrivant et sortant par exemple sur une seule voie comme décrit ci-dessus en référence aux figures 1 à 6,
- un deuxième convoyeur 55 à une seule voie,
- une étiqueteuse 56, dans laquelle une étiquette est solidarisée aux récipients,
- un troisième convoyeur 57 à une seule voie,
- un deuxième dispositif 58 d'accumulation, les récipients arrivant en une seule voie et sortant par exemple sur trois voies comme décrit ci-dessus en référence aux figures 7 et 8,
- un convoyeur 59 multivoies,
- une fardeleuse 60 pour former les packs de récipients.

## Revendications

1. Dispositif (2, 40) d'accumulation et de transfert d'objets (1) comprenant :
- un convoyeur (6) d'amenée, présentant une portion (6b) aval s'étendant dans une première direction de convoyage
- un convoyeur (8,45) de sortie, présentant une portion (8a) amont s'étendant dans une deuxième direction de convoyage
- une surface (27, 43) d'accumulation,
- un premier moyen (18, 41) de transfert pour déplacer au moins un lot d'objets depuis le convoyeur d'amenée jusque sur la surface d'accumulation,
- un deuxième moyen (7, 42) de transfert pour déplacer au moins un lot d'objets depuis la surface d'accumulation jusque sur le convoyeur de sortie, au moins l'un des premier et deuxième moyens de transfert comprenant un manipulateur (18, 41, 42) robotisé équipé d'une tête (17, 48) de manipulation d'au moins un lot d'objets, **caractérisé en ce que** la surface (27, 43) d'accumulation comprend un côté amont, adjacent à la portion (6b) aval du convoyeur (6) d'amenée, et un côté aval, opposé au côté amont selon une direction d'accumulation inclinée par rapport à l'une au moins des directions de convoyage, ledit côté aval étant adjacent à la portion (8a) amont du convoyeur (8) de sortie.

2. Dispositif selon la revendication 1, dans lequel la direction d'accumulation est perpendiculaire à la direction de convoyage du convoyeur(6) d'amenée ou du convoyeur (8, 45) de sortie, concerné par le transfert par le manipulateur (18, 41, 42) robotisé.

3. Dispositif selon la revendication 1 ou la revendication 2, dans lequel l'un des premier et deuxième moyens de transfert comprend ledit manipulateur (18, 41, 42) robotisé, l'autre desdits premier et deuxième moyens comprenant un convoyeur (7) d'accumulation équipé d'un tapis rotatif, lequel tapis rotatif s'étend le long de ladite surface (27) d'accumulation et est entraîné selon une direction de convoyage sensiblement perpendiculaire à une direction de convoyage du convoyeur, d'amenée ou de sortie, concerné par le transfert.

4. Dispositif selon la revendication 3, dans lequel
le manipulateur robotisé (41, 42) a trois axes de déplacement, la tête de manipulation (17, 48) pouvant avancer à la vitesse du convoyeur, d'amenée ou de sortie, concerné par le transfert.

5. Dispositif selon l'une des revendications précédentes, dans lequel le dispositif comprend en outre un moyen (29) de détermination d'un taux de remplissage en cours sur la surface (27) d'accumulation et une unité (28) de commande du manipulateur (18, 41, 42) robotisé raccordée audit moyen (29) de détermination, et dans lequel la tête (17, 48) de manipulation est mobile entre une position (a, b) prédéterminée au-dessus du convoyeur (6) d'amenée ou de sortie et une position (c, d) variable au-dessus de la surface (27) d'accumulation, laquelle position (c) variable est déterminée par l'unité (28) centrale en fonction du taux de remplissage en cours.

6. Dispositif selon la revendication 4, dans lequel
le premier moyen de transfert comprend un manipulateur (18, 41) robotisé, la position (c) variable de destination de la rangée transférée étant déterminée de manière à pousser les unes contre les autres les rangées d'objets précédemment transférées et encore sur le convoyeur (7) d'accumulation.

7. Dispositif selon l'une des revendications précédentes, dans lequel la tête (17, 48) de manipulation est mobile verticalement entre une position (b, c) active et une position (a, d) escamotée, et comprend un premier poussoir (24, 46) latéral s'étendant parallèlement à la direction de convoyage du convoyeur (6) d'amenée ou de sortie et conçu pour s'étendre, en position active tout le long d'un coté extérieur du lot d'objets à transférer.

8. Dispositif selon l'une des revendications précédentes, dans lequel la tête (17, 48) de manipulation est une coiffe en U, la forme du U étant visible dans un plan perpendiculaire à la direction de convoyage du convoyeur d'amenée ou de sortie.

9. Dispositif selon l'une des revendications précédentes, comprenant un dispositif (32) d'amenée des objets incluant le convoyeur (6) d'amenée et un moyen (33) d'accumulation intermédiaire disposé en amont du convoyeur d'amenée, et/ou comprend un dispositif (35) de sortie des objets incluant le convoyeur (8,45) de sortie et un moyen (36) d'accumulation intermédiaire disposé en aval du convoyeur de sortie.

10. Dispositif selon la revendication 8, dans lequel
le moyen (37, 36) d'accumulation intermédiaire comprend un convoyeur (4, 9) intermédiaire à tapis lisse, suivi d'un dispositif (5, 10) de freinage.

11. Procédé de transfert de lots d'objets (1) depuis un convoyeur (6) d'amenée jusqu'à un convoyeur (8,45) de sortie,
- utilisant un premier moyen (18, 41) de transfert d'au moins un lot d'objets depuis le convoyeur (6) d'amenée jusque sur une surface (27, 43) d'accumulation, la surface (27, 43) d'accumulation comprenant un côté amont, adjacent à la portion (6b) aval du convoyeur (6) d'amenée, et un côté aval, opposé au côté amont selon une direction d'accumulation inclinée par rapport à l'une au moins des directions de convoyage, ledit côté aval étant adjacent à la portion (8a) amont du convoyeur (8) de sortie
- un deuxième moyen (7, 42) de transfert d'au moins un lot d'objets depuis la surface d'accumulation jusque sur le convoyeur (8,45) de sortie, au moins l'un des premier et deuxième moyens de transfert comprenant un manipulateur (18, 41, 42) robotisé équipé d'une tête (17, 48) de manipulation d'au moins un lot d'objets,
- un moyen (29) de détermination d'un taux de remplissage en cours sur la surface (27) d'accumulation, et
- une unité (28) de commande du manipulateur robotisé (18, 41, 42) raccordée audit moyen (29) de détermination et calculant, en fonction du taux de remplissage en cours, une position (C) variable de la tête de manipulation (17, 48) au-dessus de la surface d'accumulation.

12. Procédé selon la revendication 11, dans lequel chacun des premier et deuxième moyens de transfert est synchronisé en débit d'objets avec le convoyeur correspondant, d'amenée ou de sortie.

13. Procédé selon la revendication 11 ou 12, dans lequel on arrête le convoyeur (6) d'amenée lorsque le lot d'objets est transféré depuis ledit convoyeur (6) d'amenée et on accélère le convoyeur (6) d'amenée jusqu'à une survitesse de rattrapage pour que le débit moyen de transfert soit égal au débit moyen d'amenée,
et/ou dans lequel on arrête le convoyeur (8,45) de sortie lorsque le lot d'objets est transféré sur ledit convoyeur (8,45) de sortie et on accélère le convoyeur (8,45) de sortie jusqu'à une survitesse de rattrapage pour que le débit moyen de transfert soit égal au débit moyen de sortie.

14. Procédé selon la revendication 11, où
le deuxième moyen de transfert comprend un manipulateur (42) robotisé, le convoyeur (45) de sortie étant un convoyeur multivoies, ledit manipulateur (42) robotisé comprenant une tête (48) de manipulation comprenant au moins un poussoir (46), et où
les objets sont disposés en rangée sur la surface (27, 43) d'accumulation et
le manipulateur (42) robotisé exerce une force de poussée sur un nombre de rangées d'objets supérieur ou égal à deux.

15. Procédé selon la revendication 11, où
le deuxième moyen de transfert comprend un manipulateur (42) robotisé, le convoyeur (45) de sortie étant un convoyeur multivoies, ledit manipulateur (42) robotisé comprenant une tête (48) de manipulation comprenant au moins un poussoir (46), et où
les objets sont disposés en rangée sur la surface (27, 43) d'accumulation et
le manipulateur (42) robotisé exerce une force de poussée sur un nombre de rangées d'objets correspondant au nombre de voies du convoyeur (45) de sortie.

## Patentansprüche

1. Vorrichtung (2, 40) zur Speicherung und Übertragung von Objekten (1), umfassend:
- ein Zuleitungsförderband (6), das einen stromabwärtigen Abschnitt (6b) aufweist, der sich in eine erste Förderrichtung erstreckt,
- ein Ableitungsförderband (8, 45), das einen stromaufwärtigen Abschnitt (8a) aufweist, der sich in eine zweite Förderrichtung erstreckt,
- eine Sammelfläche (27, 43),
- ein erstes Übertragungsmittel (18, 41), um mindestens eine Menge von Objekten vom Zuleitungsförderband zur Sammelfläche zu verschieben,
- ein zweites Übertragungsmittel (7, 42), um mindestens eine Menge von Objekten von der Sammelfläche zum Ableitungsförderband zu verschieben,
wobei mindestens eines der ersten und zweiten Übertragungsmittel einen Robotermanipulator (18, 41, 42) umfasst, der mit einem Kopf (17, 48) zur Manipulation mindestens einer Menge von Objekten ausgestattet ist,
**dadurch gekennzeichnet, dass** die Sammelfläche (27, 43) eine stromaufwärtige Seite, die an den stromabwärtigen Abschnitt (6b) des Zuleitungsförderbandes (6) angrenzt, und eine stromabwärtige Seite umfasst, die der stromaufwärtigen Seite in einer geneigten Sammelrichtung in Bezug zu mindestens einer der Förderrichtungen gegenüberliegt, wobei die stromabwärtige Seite an den stromaufwärtigen Abschnitt (8a) des Ableitungsförderbandes (8) angrenzt.

2. Vorrichtung nach Anspruch 1, bei der die Sammelrichtung senkrecht zur Förderrichtung des Zuleitungsförderbandes (6) oder des Ableitungsförderbandes (8, 45) ist, das von der Übertragung durch den Robotermanipulator (18, 41, 42) betroffen ist.

3. Vorrichtung nach Anspruch 1 oder 2, bei der eines des ersten und zweiten Übertragungsmittels den Robotermanipulator (18, 41, 42) umfasst, wobei das andere des ersten und zweiten Mittels einen Speicherförderer (7) umfasst, der mit einem rotierenden Förderband versehen ist, wobei sich das rotierende Förderband entlang der Sammelfläche (27) erstreckt und in einer Förderrichtung im Wesentlichen senkrecht zu einer Förderrichtung des Zuleitungs- oder Ableitungsförderbandes, das von der Übertragung betroffen ist, angetrieben wird.

4. Vorrichtung nach Anspruch 3, bei der der Robotermanipulator (41, 42) drei Bewegungsachsen hat, wobei sich der Manipulationskopf (17, 48) mit der Geschwindigkeit des Zuleitungs- oder Ableitungsförderbandes, das von der Übertragung betroffen ist, vorschieben kann.

5. Vorrichtung nach einem der vorhergehenden Ansprüche, wobei die Vorrichtung ferner ein Mittel (29) zur Bestimmung eines laufenden Füllstandes auf der Sammelfläche (27) und eine Einheit (28) zur Steuerung des Robotermanipulators (18, 41, 42), die an das Bestimmungsmittel (29) angeschlossen ist, umfasst, und wobei der Manipulationskopf (17, 48) zwischen einer vorbestimmten Position (a, b) über dem Zuleitungs-(6) oder Ableitungsförderband und einer variablen Position (c, d) über der Sammelfläche (27) beweglich ist, wobei die variable Position (c) durch die Zentraleinheit (28) in Abhängigkeit von dem laufenden Füllstand bestimmt wird.

6. Vorrichtung nach Anspruch 4, bei der das erste Übertragungsmittel einen Robotermanipulator (18, 41) umfasst, wobei die variable Zielposition (c) der übertragenen Reihe derart bestimmt wird, dass die vorher übertragenen Reihen von Objekten gegeneinander und auch auf den Speicherförderer (7) geschoben werden.

7. Vorrichtung nach einem der vorhergehenden Ansprüche, bei der der Manipulationskopf (17, 48) vertikal zwischen einer aktiven Position (b, c) und einer eingezogenen Position (a, d) beweglich ist und einen ersten Seitenschieber (24, 46) umfasst, der sich parallel zur Förderrichtung des Zuleitungs- (6) oder Ableitungsförderbandes erstreckt und dazu vorgesehen ist, sich in der aktiven Position entlang einer gesamten Außenseite der zu übertragenden Menge von Objekten zu erstrecken.

8. Vorrichtung nach einem der vorhergehenden Ansprüche, bei der der Manipulationskopf (17, 48) eine U-förmige Abdeckung ist, wobei die Form des U in einer Ebene senkrecht zur Förderrichtung des Zuleitungs- oder Ableitungsförderbandes zu sehen ist.

9. Vorrichtung nach einem der vorhergehenden Ansprüche, umfassend eine Vorrichtung (32) zur Zuleitung der Objekte einschließlich des Zuleitungsförderbandes (6) und ein Zwischensammelmittel (33), das stromaufwärts des Zuleitungsförderbands angeordnet ist, und/oder umfassend eine Vorrichtung (35) zur Ableitung der Objekte einschließlich des Ableitungsförderbandes (8, 45) und ein Zwischensammelmittel (36), das stromabwärts des Ableitungsförderbands angeordnet ist.

10. Vorrichtung nach Anspruch 8, bei der das Zwischensammelmittel (37, 36) einen Zwischenförderer (4, 9) mit glattem Förderband, gefolgt von einer Bremsvorrichtung (5, 10) umfasst.

11. Verfahren zur Übertragung von Mengen von Objekten (1) von einem Zuleitungsförderband (6) zu einem Ableitungsförderband (8, 45),
- das ein erstes Mittel (18, 41) zur Übertragung mindestens einer Menge von Objekten von dem Zuleitungsförderband (6) zu einer Sammelfläche (27, 43) verwendet, wobei die Sammelfläche (27, 43) eine stromaufwärtige Seite, die an den stromabwärtigen Abschnitt (6b) des Zuleitungsförderbandes (6) angrenzt, und eine stromabwärtige Seite umfasst, die der stromaufwärtigen Seite in einer Sammelrichtung, die in Bezug zu mindestens einer der Förderrichtungen geneigt ist, gegenüberliegt, wobei die stromabwärtige Seite an den stromaufwärtigen Abschnitt (8a) des Ableitungsförderbandes (8) angrenzt,
- das ein zweites Mittel (7, 42) zur Übertragung mindestens einer Menge von Objekten von der Sammelfläche zum Ableitungsförderband (8, 45) verwendet,
wobei mindestens eines des ersten und zweiten Übertragungsmittels einen Robotermanipulator (18, 41, 42) umfasst, der mit einem Kopf (17, 48) zur Manipulation mindestens einer Menge von Objekten ausgestattet ist,
- das ein Mittel (29) zur Bestimmung eines laufenden Füllstandes auf der Sammelfläche (27) verwendet, und
- das eine Einheit (28) zur Steuerung des Robotermanipulators (18, 41, 42) verwendet, die an das Bestimmungsmittel (29) angeschlossen ist und in Abhängigkeit vom laufenden Füllstand eine variable Position (c) des Manipulationskopfes (17, 48) über der Sammelfläche berechnet.

12. Verfahren nach Anspruch 11, bei dem jedes des ersten und zweiten Übertragungsmittels hinsichtlich der Menge an Objekten mit dem entsprechenden Zuleitungs- oder Ableitungsförderband synchronisiert ist.

13. Verfahren nach Anspruch 11 oder 12, bei dem das Zuleitungsförderband (6) angehalten wird, wenn die Menge von Objekten von dem Zuleitungsförderband (6) übertragen wird, und das Zuleitungsförderband (6) bis zu einer Ausgleichsübergeschwindigkeit beschleunigt wird, damit die durchschnittliche Übertragungsmenge gleich der durchschnittlichen Zuleitungsmenge ist,
und/oder bei dem das Ableitungsförderband (8, 45) angehalten wird, wenn die Menge von Objekten auf das Ableitungsförderband (8, 45) übertragen wird, und das Ableitungsförderband (8, 45) bis zu einer Ausgleichsübergeschwindigkeit beschleunigt wird, damit die durchschnittliche Übertragungsmenge gleich der durchschnittlichen Ableitungsmenge ist.

14. Verfahren nach Anspruch 11, bei dem
das zweite Übertragungsmittel einen Robotermanipulator (42) umfasst, wobei das Ableitungsförderband (45) ein Mehrwegeförderer ist, wobei der Robotermanipulator (42) einen Manipulationskopf (48) umfasst, der mindestens einen Schieber (46) aufweist, und bei dem
die Objekte in einer Reihe auf der Sammelfläche (27, 43) angeordnet sind und
der Robotermanipulator (42) eine Schubkraft auf eine Anzahl von Objektreihen größer oder gleich zwei ausübt.

15. Verfahren nach Anspruch 11, bei dem
das zweite Übertragungsmittel einen Robotermanipulator (42) umfasst, wobei das Ableitungsförderband (45) ein Mehrwegeförderer ist, wobei der Robotermanipulator (42) einen Manipulationskopf (48) umfasst, der mindestens einen Schieber (46) aufweist, und bei dem
die Objekte in einer Reihe auf der Sammelfläche (27, 43) angeordnet sind und
der Robotermanipulator (42) eine Schubkraft auf eine Anzahl von Objektreihen entsprechend der Anzahl von Wegen des Ableitungsförderbandes (45) ausübt.

## Claims

1. Device (2, 40) for accumulation and transfer of objects (1) comprising:
- a feed conveyor (6), having a downstream portion (6b) that extends in a first conveying direction,
- an output conveyor (8, 45), having an upstream portion (8a) that extends in a second conveying direction,
- an accumulation surface (27, 43),
- a first transfer means (18, 41) to move at least one batch of objects from the feed conveyor onto the accumulation surface,
- a second transfer means (7, 42) to move at least one batch of objects from the accumulation surface onto the output conveyor,
at least one of the first and second transfer means comprising a robotic manipulator (18, 41, 42) equipped with a head (17, 48) for manipulating at least one batch of objects, **characterized in that** the accumulation surface (27, 43) comprises an upstream side, adjacent to the downstream portion (6b) of the feed conveyor (6), and a downstream side, opposite the upstream side in an accumulation direction that is inclined relative to at least one of the conveying directions, with said downstream side being adjacent to the upstream portion (8a) of the output conveyor (8).

2. Device according to Claim 1, wherein the accumulation direction is perpendicular to the conveying direction of the feed conveyor (6) or of the output conveyor (8, 45) that deals with the transfer by the robotic manipulator (18, 41, 42).

3. Device according to Claim 1 or Claim 2, wherein one of the first and second transfer means comprises said robotic manipulator (18, 41, 42), with the other of said first and second means comprising an accumulation conveyor (7) equipped with a rotary mat, where said rotary mat extends along said accumulation surface (27) and is driven in a conveying direction that is essentially perpendicular to a conveying direction of the feed or output conveyor that deals with the transfer.

4. Device according to Claim 3, wherein the robotic manipulator (41, 42) has three axes of movement, with the manipulation head (17, 48) being able to move forward at the speed of the feed or output conveyor that deals with the transfer.

5. Device according to one of the preceding claims, wherein the device further comprises a means (29) for determining a fill rate in progress on the accumulation surface (27) and a control unit (28) for the robotic manipulator (18, 41, 42) that is connected to said determination means (29), and wherein the manipulation head (17, 48) can move between a predetermined position (a, b) above the feed or output conveyor (6) and a variable position (c, d) above the accumulation surface (27), with said variable position (c) being determined by the central processing unit (28) as a function of the fill rate in progress.

6. Device according to Claim 4, wherein the first transfer means comprises a robotic manipulator (18, 41), with the variable destination position (c) of the transferred row being determined so as to push the rows of objects against one another that have been previously transferred and are still on the accumulation conveyor (7).

7. Device according to one of the preceding claims, wherein the manipulation head (17, 48) can move vertically between an active position (b, c) and a retracted position (a, d), and comprises a first lateral pusher (24, 46) that extends parallel to the conveying direction of the feed or output conveyor (6) and is designed to extend in the active position all along one exterior side of the batch of objects to be transferred.

8. Device according to one of the preceding claims, wherein the manipulation head (17, 48) is a U-shaped cap, with the shape of the U being visible in a plane that is perpendicular to the conveying direction of the feed or output conveyor.

9. Device according to one of the preceding claims, comprising a device (32) for feeding the objects that includes the feed conveyor (6) and an intermediate accumulation means (33) situated upstream from the feed conveyor, and/or comprises an output device (35) for the objects that includes the output conveyor (8, 45) and an intermediate accumulation means (36) situated downstream from the output conveyor.

10. Device according to Claim 8, wherein the intermediate accumulation means (37, 36) comprises an intermediate conveyor (4, 9) with a smooth mat, followed by a braking device (5, 10).

11. Method of transferring batches of objects (1) from a feed conveyor (6) onto an output conveyor (8, 45),
- using a first means (18, 41) for transferring at least one batch of objects from the feed conveyor (6) onto an accumulation surface (27, 43), the accumulation surface (27, 43) comprising an upstream side, adjacent to the downstream portion (6b) of the feed conveyor (6), and a downstream side, opposite the upstream side in an accumulation direction that is inclined relative to at least one of the conveying directions, with said downstream side being adjacent to the upstream portion (8a) of the output conveyor (8)
- a second means (7, 42) for transferring at least one batch of objects from the accumulation surface onto the output conveyor (8, 45), at least one of the first and second transfer means comprising a robotic manipulator (18, 41, 42) equipped with a head (17, 48) for manipulating at least one batch of objects,
- a means (29) for determining a fill rate in progress on the accumulation surface (27), and
- a control unit (28) for the robotic manipulator (18, 41, 42) that is connected to said determination means (29) and calculating, as a function of the fill rate in progress, a variable position (C) of the manipulation head (17, 48) above the accumulation surface.

12. Method according to Claim 11, wherein each of the first and second transfer means is synchronized by flow rate of objects with the corresponding feed or output conveyor.

13. Method according to Claim 11 or 12, wherein the feed conveyor (6) is halted when the batch of objects is transferred from said feed conveyor (6) and the feed conveyor (6) is accelerated up to a catchup overspeed so that the mean transfer flow rate is equal to the mean feed flow rate,
and/or wherein the output conveyor (8, 45) is halted when the batch of objects is transferred onto said output conveyor (8, 45) and the output conveyor (8, 45) is accelerated up to a catchup overspeed so that the mean transfer flow rate is equal to the mean output flow rate.

14. Method according to Claim 11, wherein
the second transfer means comprises a robotic manipulator (42), the output conveyor (45) being a multi-track conveyor, said robotic manipulator (42) comprising a manipulation head (48) comprising at least one pusher (46), and wherein
the objects are situated in rows on the accumulation surface (27, 43) and
the robotic manipulator (42) exerts a pushing force on a number of rows of objects that is greater than or equal to two.

15. Method according to Claim 11, wherein
the second transfer means comprises a robotic manipulator (42), the output conveyor (45) being a multi-track conveyor, said robotic manipulator (42) comprising a manipulation head (48) comprising at least one pusher (46), and wherein
the objects are situated in rows on the accumulation surface (27, 43) and
the robotic manipulator (42) exerts a pushing force on a number of rows of objects corresponding to the number of tracks of the output conveyor (45).
